# EUROPÄISCHE PATENTSCHRIFT

(11) **EP 2 953 828 B1**
(45) Veröffentlichungstag und Bekanntmachung des Hinweises auf die Patenterteilung: **31.05.2017**
(21) Anmeldenummer: 14701204.1
(22) Anmeldetag: 24.01.2014
(51) Int. Cl.: B60S 9/08, F16B 21/06

(54) **STÜTZVORRICHTUNG MIT MONTAGEEINHEIT**
SUPPORTING DEVICE HAVING A MOUNTING UNIT
DISPOSITIF DE SUPPORT MUNI D'UNE UNITÉ DE MONTAGE

(30) Priorität: 08.02.2013 DE 102013202076
(43) Veröffentlichungstag der Anmeldung: 16.12.2015
(73) Patentinhaber: SAF-HOLLAND GmbH, 63856 Bessenbach (DE)
(72) Erfinder: WEBER, Elmar, 48249 Dülmen (DE)
(74) Vertreter: Müller Schupfner & Partner Patent- und Rechtsanwaltspartnerschaft mbB
(86) Internationale Anmeldenummer: PCT/EP2014/051362
(87) Internationale Veröffentlichungsnummer: WO 2014/122030

(56) Entgegenhaltungen:
- EP-A1- 1 595 761
- EP-A2- 0 380 941
- DE-A1-102005 034 552
- FR-A- 986 200
- US-A- 5 980 217

## Beschreibung

Die vorliegende Erfindung betrifft eine Stützanordnung für Sattelanhänger. Stützvorrichtungen oder auch Stützwinden für Sattelanhänger sind aus dem Stand der Technik bekannt. Sie dienen der Abstützung oder Höhenverstellung von Trailern, Sattelanhängern oder Fahrzeugen etc. Sie weisen in der Regel einen Teleskopmechanismus auf, der aus einem Außenstützrohr und einem Innenstützrohr besteht. Außen- und Innenstützrohr sind über einen Spindelmechanismus (Mutter und Gewindespindel) miteinander in Eingriff. Zur Anordnung der Stützvorrichtung an einem Sattelanhänger oder dergleichen befinden sich am Außenstützrohr eine oder mehrere Montageflächen. Diese Montageflächen sind am Außenstützrohr in der Regel angeschweißt oder anderweitig integriert. Hierbei besteht allerdings das Problem, dass eine Stützvorrichtung an möglichst unterschiedliche Typen und Größen von z. B. Sattelanhängern anordenbar sein muss. Es müssen also Stützvorrichtungen mit unterschiedlichen Konfigurationen von Montageflächen vorgehalten werden. In Europa wird häufig mit kleinen Montageflächen gearbeitet, die entweder in einer oberen Position oder in einer unteren Position bezogen auf eine Längsrichtung der Stützvorrichtung verbaut sind (oder auch in einer doppelten Position). In den USA wird häufig eine Montageplatte in einer oberen Position verwendet. Hier wird allerdings ein anderes Bohrbild verwendet als bei den europäischen Versionen. Dies führt zu einer sehr großen Variantenvielfalt bei Stützvorrichtungen.

Dokument US 2009/057633 A1 offenbart eine Stützanordnung für Sattelanhänger gemäß dem Oberbegriff des Anspruchs 1.

Es ist daher Aufgabe der vorliegenden Erfindung, eine Stützanordnung für Sattelanhänger anzugeben, welche die Variantenvielfalt reduzieren und gleichzeitig eine höchstmögliche Flexibilität bei der Anordnung von Stützvorrichtungen an Sattelanhängern oder dergleichen bereitstellen.

Diese Aufgabe wird gelöst durch eine Stützanordnung für Sattelanhänger gemäß Anspruch 1. Weitere Vorteile und Merkmale der Erfindung ergeben sich aus den Unteransprüchen sowie der Beschreibung und den beigefügten Figuren.

Erfindungsgemäß ist eine Stützanordnung für Sattelanhänger mit einer Montageeinheit und einer Stützvorrichtung vorgesehen, wobei sich die Stützvorrichtung entlang einer Längsrichtung erstreckt, und wobei die Montageeinheit ausgelegt ist, die Stützvorrichtung quer zur Längsrichtung durch einen Form- und/oder Kraftschluss festzulegen, und an einem weiteren Element, insbesondere einem Sattelanhänger anzuordnen. Die Anordnung an den Sattelanhänger erfolgt bevorzugt an dessen Fahrgestell oder Rahmen vor und/oder hinter einem Achsaggregat des Sattelanhängers, um den Sattelanhänger B. ohne Zugmaschine abzustellen oder ihn während der Be- und/oder Entladung zu stabilisieren. Es versteht sich, dass Stützvorrichtungen der genannten Art auch an anderen Fahrzeugen zum Einsatz kommen können. Der Einfachheit halber werden allerdings die Vorteile und Merkmale der Erfindung lediglich am Beispiel eines Sattelanhängers aufgezeigt, ohne eine Beschränkung der Allgemeinheit. Quer zu einer Längsrichtung des Sattelanhängers gesehen, sind bevorzugt zwei Stützvorrichtungen angeordnet, welche über eine Verbindungswelle miteinander verbunden sind. Über die Verbindungswelle kann eine gleichzeitige Betätigung der beiden Stützvorrichtungen erreicht werden. Zweckmäßigerweise weist jede Stützvorrichtung ein gerades Außenstützrohr und ein gerades Innenstützrohr auf, wobei das Innenstützrohr teleskopierbar im oder am Außenstützrohr angeordnet ist und mittels eines im Inneren der Stützvorrichtung verbauten Spindelmechanismus in axialer Richtung relativ zum Außenstützrohr bewegt werden kann. Vorteilhafterweise ist an einem Ende des Innenstützrohrs ein Ausgleichsfuß oder dergleichen angebracht, um einen optimalen "Stand" der Stützvorrichtung auf dem Boden zu gewährleisten. Zur Betätigung der Stützvorrichtung ist eine Betätigungseinrichtung vorgesehen, welche mit Vorteil als separate Baueinheit ausgebildet und außerhalb des Außenstützrohrs angeordnet ist. Die Betätigungseinrichtung, welche bevorzugt über eine Handkurbel oder dergleichen bedienbar ist, umfasst ein Getriebe, welches zweckmäßigerweise die Stützvorrichtung in der Höhe (über den Teleskopmechanismus) verstellbar macht. Mit Vorteil ist auch die bereits genannte Verbindungswelle mit der Betätigungseinrichtung bzw. mit dem Getriebe gekoppelt, so dass über die Handkurbel und die Verbindungswelle gleichzeitig zumindest zwei Stützvorrichtungen betätigbar sind. Bevorzugterweise weist das Außenstützrohr quer zur Längsrichtung der Stützvorrichtung gesehen einen rechteckigen oder auch weitgehend quadratischen Querschnitt auf. Dieser Querschnitt muss nun an dem weiteren Element oder dem Bauteil, das "gestützt" werden muss, befestigt werden. Bevorzugt ist also das Außenstützrohr der Bereich der Stützvorrichtung, über welchen die Anordnung der Stützvorrichtung an das zu stützende Bauteil erfolgt. Insbesondere erfolgt die Anordnung also über eine Außenkontur des Außenstützrohrs. Der Form- und/oder Kraftschluss wirkt bevorzugt nur an der Außenkontur der Stützvorrichtung. Dies ergibt sich schon daraus, dass einen Innenseite des Außenstützrohrs zur Verlagerung des Innenstützrohrs möglichst frei blieben sollte. Besonders bevorzugt ist hierzu die Montageeinheit vorgesehen. Vorteilhafterweise kann nun darauf verzichtet werden, im Bereich des Außenstützrohrs eine Schweißkonstruktion oder dergleichen vorzusehen, um das Außenstützrohr an den Sattelanhänger bzw. an dessen Rahmen oder an dessen Fahrgestell anzuordnen. Mit Vorteil ist die Stützvorrichtung im Bereich des Außenstützrohrs durch die Montageeinheit form- und/oder kraftschlüssig festgelegt. Ein Stoffschluss ist gerade nicht erforderlich. Die Festlegung der Stützvorrichtung quer zur Längsrichtung durch den Form- und/oder Kraftschluss meint dabei insbesondere, dass die Stützvorrichtung bevorzugt in allen Richtungen quer zur Längsrichtung festgelegt ist. Die Anordnung der Stützvorrichtung erfolgt mittelbar über die Montageeinheit am Sattelanhänger bzw. allgemein an dem Element oder Bauteil, welches gestützt werden soll. Da die Montageeinheit als gesondertes Bauteil ausgebildet ist, kann sie entlang der Längsrichtung der Stützvorrichtung in unterschiedlichen Positionen bzw. bezogen auf die Längsrichtung der Stützvorrichtung in unterschiedlichen Höhen angeordnet sein. Die Verwendung der Montageeinheit kann vorteilhafterweise Varianten reduzieren bzw. an das Ende der Produktion verlagern. Von Vorteil ist hier insbesondere die form- und/oder kraftschlüssige Verbindung der Montageeinheit und der Stützvorrichtung. Die Anordnung der Montageeinheit an dem Sattelanhänger bzw. allgemein an dem zu stützenden Bauteil erfolgt bevorzugt über zumindest einen geeigneten Befestigungsbereich, welcher im Folgenden noch genauer beschrieben wird. Bevorzugt handelt es sich bei dem Befestigungsbereich um eine Bohrung bzw. um mehrere Bohrungen über welche die Montageeinheit mittels Schrauben beispielsweise an dem Sattelanhänger befestigt werden kann.

Vorteilhafterweise umfasst die Montageeinheit einen Montagebereich und einen Anordnungsbereich, wobei der Montagebereich für die Anordnung der Stützvorrichtung an dem weiteren Bauteil ausgelegt ist, und wobei der Anordnungsbereich für die Festlegung der Stützvorrichtung ausgelegt ist. Der Anordnungsbereich ist primär der Bereich, welcher für die form- und/oder kraftschlüssige Festlegung der Stützvorrichtung vorgesehen ist, während der Montagebereich primär der Bereich ist, der für die Anordnung der Montageeinheit an dem zu stützenden Bauteil vorgesehen ist. Dabei muss diese Aufgaben- oder Funktionstrennung nicht strikt erfolgen. So kann auch der Anordnungsbereich einen oder mehrere Befestigungsbereiche aufweisen bzw. der Montagebereich den Form- und/oder Kraftschluss für die Festlegung der Stützvorrichtung unterstützen. Entscheidend ist, dass die Montageeinheit ausgelegt ist, die Stützvorrichtung über den Anordnungsbereich form- und/oder kraftschlüssig festzulegen und dass die Montageeinheit ausgelegt ist, über den Montagebereich, ebenfalls bevorzugt form- und/oder kraftschlüssig, an einem weiteren Element angeordnet zu werden. Erfindungsgemäß umfasst und/oder umschließt der Anordnungsbereich die Stützvorrichtung zumindest teilweise, um den Kraft- und/oder Formschluss aufzubauen.

Bevorzugt ist eine Verlagerung und/oder Verdrehung der Stützvorrichtung quer zur bzw. um die Längsrichtung durch den Kraft- und/oder Formschluss zwischen der Montageeinheit und der Stützvorrichtung verhindert. Insbesondere ist die Verlagerung und/oder Verdrehung quer zur Längsrichtung durch den Anordnungsbereich verhindert. Die Stützvorrichtung ist durch den Form- und/oder Kraftschluss vorteilhafterweise also drehfest festgelegt bzw. gelagert. Die Montageeinheit bzw. der Anordnungsbereich ist hierzu derart gestaltet, dass die Stützvorrichtung durch sie bevorzugt geklemmt ist. Mit anderen Worten ist die Stützvorrichtung mit dem Anordnungsbereich bevorzugt formschlüssig verbunden, wobei durch ein Zusammenwirken des Anordnungsbereichs mit dem Montagebereich der Kraftschluss aufgebaut wird, beispielsweise dadurch, dass der Anordnungsbereich und der Montagebereich zueinander derart verspannt werden, dass die Stützvorrichtung zwischen Anordnungsbereich und Montagebereich geklemmt ist. Der Form- und/oder Kraftschluss legt die Stützvorrichtung in alle Raumrichtungen fest. Vorteilhafterweise umschließt und/oder umfasst der Anordnungsbereich dabei die Stützvorrichtung zumindest teilweise.

Vorteilhafterweise weist der Montagebereich zumindest einen Befestigungsbereich zur Anordnung der Montageeinheit an dem weiteren Element auf. Mit Vorteil sind entlang der Längsrichtung der Stützvorrichtung gesehen zwei Reihen von Befestigungsbereichen - bevorzugt ausgeführt als Bohrungen, insbesondere bevorzugt als runde ggf. aber auch zumindest teilweise als Langlöcher - in dem Montagebereich vorgesehen, wobei der Abstand von zwei aufeinanderfolgenden Befestigungsbereichen entlang der Längsrichtung bevorzugt etwa 40 - 70 mm, besonders bevorzugt etwa 50 - 60 mm und ganz besonders bevorzugt etwa 56 - 58 mm oder etwa 57 mm beträgt. Bevorzugt sind etwa 6-7 Befestigungsbereiche, insbesondere Rundlöcher, je Reihe angeordnet. Der Abstand von zwei aufeinanderfolgenden Befestigungsbereichen entlang der Längsrichtung der Stützvorrichtung, also der Lochabstand, bezieht sich dabei auf die Mittelpunkte der Befestigungsbereiche bzw. Bohrungen oder Löcher. Ein Reihenabstand, also der Abstand von zwei Reihen (quer zur Längsrichtung der Stützvorrichtung gesehen) liegt bevorzugt in einem Bereich von etwa 140-210 mm, besonders bevorzugt in einem Bereich von etwa 185-195 mm, ganz besonders bevorzugt bei etwa 190 mm.

Zweckmäßigerweise ist die Montageeinheit mehrteilig, insbesondere zweiteilig, ausgebildet. Bevorzugt ist der Montagebereich als im Wesentlichen ebene Montageplatte ausgebildet, während der Anordnungsbereich bevorzugt als ein Bügel oder Band oder dergleichen ausgebildet ist. Bevorzugt kommt Stahl als Werkstoff zum Einsatz. Die Positionierung bzw. Anordnung der Montageplatte an der Stützvorrichtung erfolgt bevorzugt an der Seite der Stützvorrichtung (bzw. des Außenstützrohrs), welche dem zu stützenden Bauteil zugewandt ist. Die sich daran anschließende(n) bzw. die abgewandte(n) Seite(n) der Stützvorrichtung ist/sind bevorzugt in gleicher Höhe von dem Bügel umfasst. Die Montageplatte und der Bügel bzw. der Anordnungsbereich umfassen oder umschließen die Stützvorrichtung in einer Ebene quer zur Längsrichtung gesehen bevorzugt zumindest teilweise. Zwischen der Montageplatte und dem Bügel wird über geeignete Befestigungsmittel, z. B. Schraubverbindungen, der Form- und/oder Kraftschluss aufgebaut. Hierbei kann mit Vorteil über die gleichen Befestigungsmittel die Anordnung der Montageeinheit an das zu stützende Bauteil erfolgen. Zweckmäßigerweise kann also der Form- und/oder Kraftschluss zur Festlegung der Stützvorrichtung und die Anordnung der Montageeinheit über die gleichen Befestigungsmittel und Befestigungsbereiche erfolgen. Alternativ bevorzugt können die Montageplatte und der Bügel auch separat miteinander verschraubt werden, wodurch der Form- und/oder Kraftschluss zur Festlegung der Stützvorrichtung hergestellt ist. Durch das Umschließen des Bügels wird die Verlagerung und/oder Verdrehung der Stützvorrichtung quer zur Längsrichtung automatisch verhindert. Es versteht sich, dass es hierzu nicht notwendig ist, dass Montageeinheit bzw. der Bügel die Stützvorrichtung bzw. dessen Außenstützrohr vollständig umschließt. Wichtig ist, dass ein ausreichender Halt für die Stützvorrichtung in der Montageeinheit gegeben ist. Bei der Auslegung bzw. Dimensionierung ist hierbei zu berücksichtigen, dass statische Prüflasten von über 70.000 kg (je nach Ausführungsart) für Stützvorrichtungen realisiert werden müssen. Gerade in Längsrichtung der Stützvorrichtung treten also enorme (Stütz-Kräfte) auf. Erfindungsgemäß ist zwischen der Stützvorrichtung und der Montageeinheit ein Zusatz-Formschluss vorgesehen, welcher eine Verlagerung der Stützvorrichtung und der Montageeinheit relativ zueinander entlang der Längsrichtung verhindert. Der Zusatz-Formschluss ist insbesondere ausgelegt, die Kräfte, die durch das zu stützende Element über die Montageeinheit entlang der Längsrichtung auf den Kraft- und/oder Formschluss wirken, zu entlasten. Der Zusatz-Formschluss ermöglicht sozusagen eine Abstützung der Montageeinheit an der Stützvorrichtung, insbesondere in deren Längsrichtung. Die hohen Stützkräfte können mit Vorteil durch den Zusatz-Formschluss in die Montageeinheit eingeleitet werden.

Zweckmäßigerweise ist der Zusatz-Formschluss durch zumindest einen Vorsprung in der Stützvorrichtung und/oder der Montageeinheit ausgebildet, welcher in einen dazu korrespondierenden Rücksprung der Montageeinheit bzw. Stützvorrichtung eingreift. Bevorzugt ist beispielsweise an der Montageplatte der Vorsprung angeordnet, während an dem Außenstützrohr der Stützvorrichtung der korrespondierende Rücksprung angeordnet ist. Alternativ bevorzugt kann auch an dem Außenstützrohr der Stützvorrichtung ein Vorsprung angeordnet sein, welcher in einen Rücksprung der Montageplatte eingreift. Es versteht sich, dass die ganze Montageeinheit, also auch der Bügel, mit Vor- und/oder Rücksprüngen versehen sein kann. Es kann also auch mehr als ein Zusatz-Formschluss vorgesehen sein. Es versteht sich, dass nach demselben Prinzip auch zwischen dem Montagebereich und dem zu stützenden Bauteil zumindest ein Zusatz-Formschluss vorgesehen sein kann bzw. auch zwischen der Montageplatte (bzw. Montagebereich) und dem Bügel (bzw. Anordnungsbereich).

Mit Vorteil ist der Zusatz-Formschluss entlang der Längsrichtung der Stützvorrichtung gesehen außermittig am Montagebereich angeordnet. Mit anderen Worten ist der Zusatz-Formschluss um einen Abstand versetzt zu einem Mittelpunkt des Montagebereichs oder der Montageplatte angeordnet, d. h. der Vor- und/oder Rücksprung ist um einen Abstand versetzt zum Mittelpunkt des Montagebereichs oder der Montageplatte angeordnet. Mit Vorteil sind dadurch abhängig von der Anordnung des Montagebereichs an der Stützvorrichtung unterschiedliche Positionen für die Befestigungsbereiche realisierbar (entlang der Längsrichtung der Stützvorrichtung). Es muss also nicht vorab festgelegt werden, ob die Montageeinheit z. B. in einer oberen oder einer unteren Position (vgl. Stand der Technik) an der Stützvorrichtung festgelegt wird, abhängig davon in welcher Höhe die Befestigungsbereiche liegen sollen, bzw. ob für beide Positionen Montageeinheiten vorgehalten werden müssen. Über ein "Drehen" der Montageinheit bzw. des Montagebereichs - bevorzugt um 180° - können die obere und die untere Position konventioneller angeschweißter oder integrierter Montageplatten abgedeckt werden. An der entsprechenden Stützvorrichtung ist bevorzugt nur ein einziger korrespondierender Vor- und/oder Rücksprung vorgesehen. Die Variabilität hinsichtlich der Positionierung der Befestigungsbereiche ist allein über die Anordnung der Montageeinheit bzw. des Montagebereichs an der Stützvorrichtung realisierbar. Die Variantenvielfalt bei der Herstellung der Stützvorrichtungen bzw. deren Außenstützrohren kann reduziert werden. Bevorzugt liegt ein Verhältnis einer Gesamtlänge des Montagebereichs bzw. der Montageplatte in Längsrichtung der Stützvorrichtung gesehen zum Abstand des Zusatz-Formschlusses von dem Mittelpunkt des Montagebereichs bzw. der Montageplatte in einem Bereich von etwa 3-6, besonders bevorzugt in einem Bereich von etwa 3,5 - 5,5, ganz besonders bevorzugt in einem Bereich von etwa 4,6 - 4,9. Daraus ergibt sich, dass der Zusatz-Formschluss an der Stützvorrichtung bevorzugt etwa 180 - 200 mm, ganz besonders bevorzugt in einem Bereich von etwa 190 mm unterhalb der bereits angesprochenen Verbindungswelle angeordnet ist.

Weiterhin bevorzugt ist der Zusatz-Formschluss durch zumindest ein Zusatzelement ausgebildet, das in zueinander korrespondierenden Öffnungen der Stützvorrichtung und der Montageeinheit angeordnet ist. Das Zusatzelement kann beispielsweise ein Nutenstein oder ein Stift sein, der in die zueinander korrespondierenden Öffnungen eingeschoben und beispielsweise über einen Splint gesichert ist. Der einfacheren Vorstellung wegen sei an dieser Stelle z. B. auf Gehhilfen verwiesen, welche zur Entlastung von Gelenken und zur Mobilitätssteigerung eingesetzt werden. Auch diese sind in der Regel teleskopierbar ausgebildet und weisen eine Reihe von korrespondierenden Öffnungen auf, über welche unterschiedliche Längen einstellbar sind. Analog zu diesem Beispiel erfolgt die Anordnung der Stützvorrichtung bzw. des Außenstützrohrs der Stützvorrichtung innerhalb der Montageeinheit.

Weitere Vorteile und Merkmale ergeben sich aus der nachfolgenden Beschreibung bevorzugter Ausführungsformen der erfindungsgemäßen Stützanordnung für Sattelanhänger mit Bezug auf die beigefügten Figuren. Einzelne Merkmale der einzelnen Ausführungsformen können dabei im Rahmen der Erfindung miteinander kombiniert werden.

Es zeigen:
- Fig. 1:: einen Querschnitt einer bevorzugten Ausführungsform einer Stützvorrichtung für Sattelanhänger mit einer Montageeinheit, angeordnet an einem weiteren Element;
- Fig. 2:: einen Querschnitt einer weiteren bevorzugten Ausführungsform einer Stützvorrichtung für Sattelanhänger mit einer Montageeinheit;
- Fig. 3a:: einen Querschnitt einer weiteren bevorzugten Ausführungsform einer Stützvorrichtung für Sattelanhänger mit einer Montageeinheit;
- Fig. 3b:: einen Querschnitt einer weiteren bevorzugten Ausführungsform einer Stützvorrichtung für Sattelanhänger mit einer Montageeinheit;
- Fig. 4:: eine bevorzugte Ausführungsform einer Montageplatte;
- Fig. 5:: eine bevorzugt Ausführungsform eines Bügels;
- Fig. 6:: einen Querschnitt einer weiteren bevorzugten Ausführungsform einer Stützvorrichtung für Sattelanhänger mit einer Montageeinheit;
- Fig. 7a, b:: Mögliche Anordnungen einer Montageeinheit an einer Stützvorrichtung in zwei unterschiedlichen Positionen

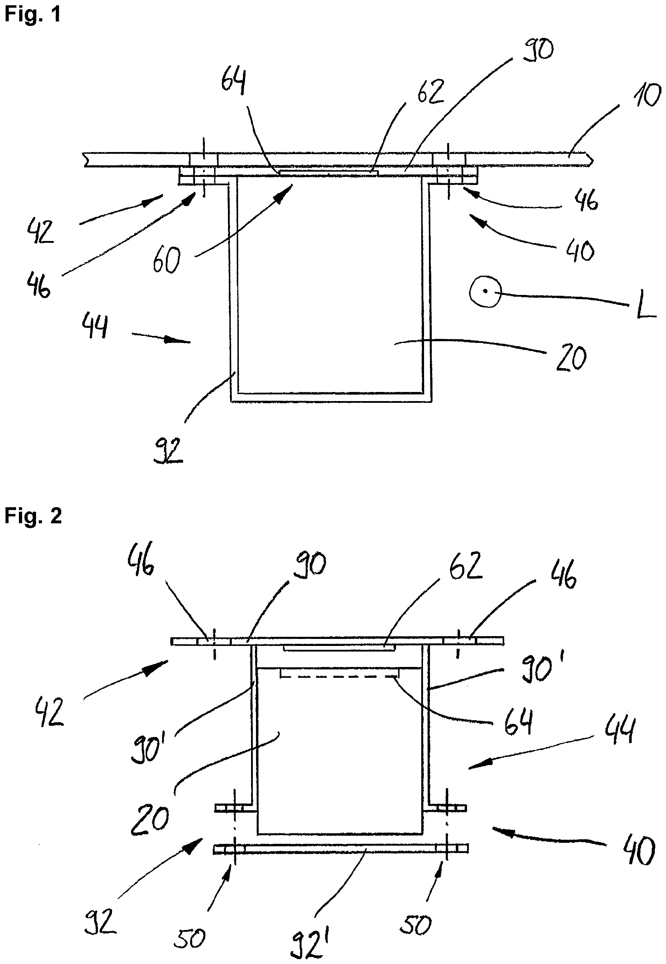

**Fig. 1** zeigt einen Querschnitt einer Stützvorrichtung 20 für Sattelanhänger mit einer Montageeinheit 40. Die Montageeinheit 40 umfasst einen Montagebereich 42 und einen Anordnungsbereich 44. Innerhalb des Anordnungsbereichs 44 ist die Stützvorrichtung 20 angeordnet. In dargestellter bevorzugter Ausführungsform wird die Montageeinheit 40 durch eine Montageplatte 90 und einen Bügel 92 gebildet, welche die Stützvorrichtung 20 sozusagen umschließen. In der dargestellten bevorzugten Ausführungsform bildet die Stützvorrichtung 20 einen Vorsprung 62 aus, welcher in einen Rücksprung 64 der Montageplatte 90 eingreift. Damit wird ein Zusatz-Formschluss 60 gebildet. Der Bügel 92 und die Montageplatte 90 bilden zusammen den Montagebereich 42 aus, welcher Befestigungsbereiche 46, hier ausgeführt als Bohrungen, aufweist. Die Bohrungen 46 korrespondieren mit geeigneten Löchern (ohne Bezugszeichen) eines weiteren Elements 10. Das weitere Element 10 bzw. das zu stützende Bauteil kann beispielsweise der Rahmen oder das Fahrgestell eines Sattelanhängers sein. Der dargestellte Schnitt ist quer zu einer Längsrichtung L angeordnet, welche sich entlang der Stützvorrichtung 20 erstreckt.

**Fig. 2** zeigt einen Querschnitt einer weiteren bevorzugten Ausführungsform einer Stützvorrichtung 20 für Sattelanhänger mit einer Montageeinheit 40. Ein Montagebereich 42 wird durch eine Montageplatte 90 gebildet, welche Befestigungsbereiche 46 umfasst. Weiter bildet die Montageplatte 90 einen Vorsprung 62 aus, welcher in einen Rücksprung 64 der Stützvorrichtung 20 eingreift. Die Montageplatte 90 ist mit zwei auskragenden Seitenteilen 90' versehen, welche die Stützvorrichtung 20 an ihren Seiten umschließen. Damit ist ein Anordnungsbereich 44 gebildet, welcher über einen Deckel 92' komplettiert wird. Die auskragenden Seitenteile 90' und der Deckel 92' bilden sozusagen einen Bügel 92. Die auskragenden Seitenteile 90' und der Deckel 92' sind über Bohrungen 50 und geeignete Befestigungsmittel (nicht dargestellt) verbindbar. Anders als bei der Ausführungsform in Fig. 1 sind in der Ausführungsform der Fig. 2 die Befestigungsbereiche 46 ausschließlich zur Anordnung der Montageeinheit 40 an ein weiteres Element 10 (nicht dargestellt) vorgesehen, nicht zum Aufbau des Form- und/oder Kraftschlusses zur Festlegung der Stützvorrichtung 20.

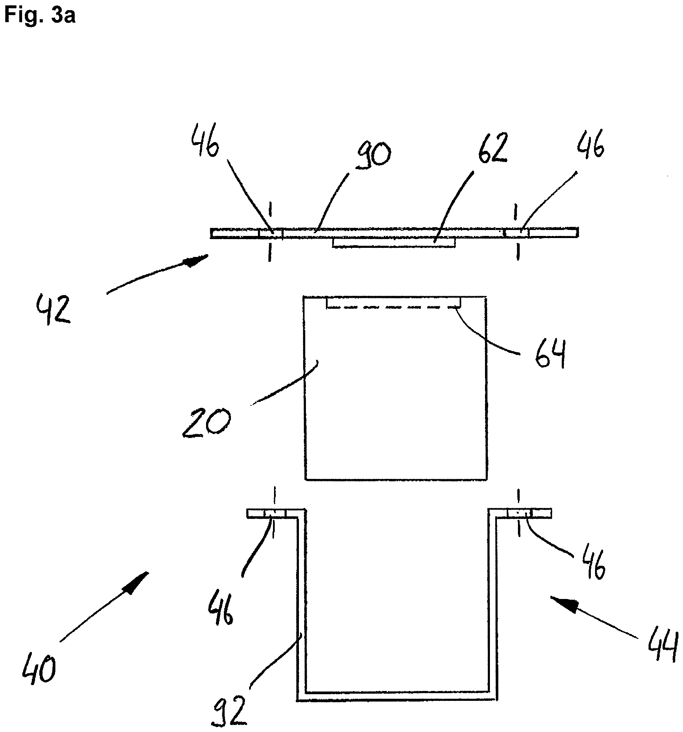

**Fig. 3a** zeigt eine weitere Schnittdarstellung einer bevorzugten Ausführungsform einer Stützvorrichtung 20 für Sattelanhänger mit einer Montageeinheit 40. Dargestellt ist eine Montageplatte 90 mit einem Vorsprung 62 und Befestigungsbereichen 46. Der Vorsprung 62 der Montageplatte 90 ist für einen Eingriff in einen Rücksprung 64 der Stützvorrichtung 20 vorgesehen. In der dargestellten bevorzugten Ausführungsform wird die Stützvorrichtung 20 mittels eines durch einen Bügel 92 gebildeten Anordnungsbereichs 44 formschlüssig festgelegt. Der eigentliche Kraftschluss erfolgt über die Befestigungsbereiche 46 und geeignete (nicht dargestellt) Befestigungselemente, z. B. Schrauben oder dergleichen.

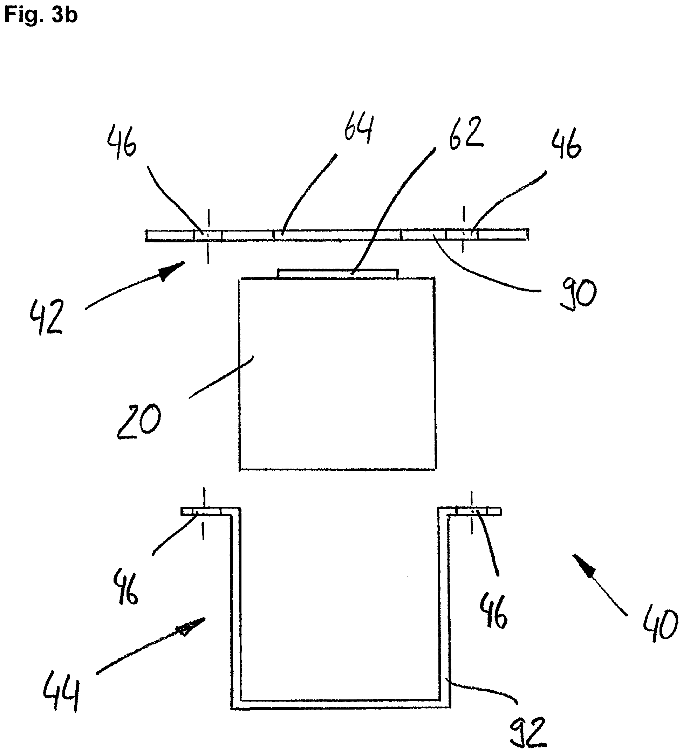

**Fig. 3b** zeigt eine weitere bevorzugte Ausführungsform der Stützvorrichtung 20 für Sattelanhänger mit einer Montageeinheit 40 in einer Schnittdarstellung. Im Vergleich zu Fig. 3a besteht ein Unterschied lediglich darin, dass die Stützvorrichtung 20 einen Vorsprung 62 aufweist, der in einen Rücksprung 64 einer Montageplatte 90 eingreift. Ansonsten gilt das zu Fig. 3a Gesagte.

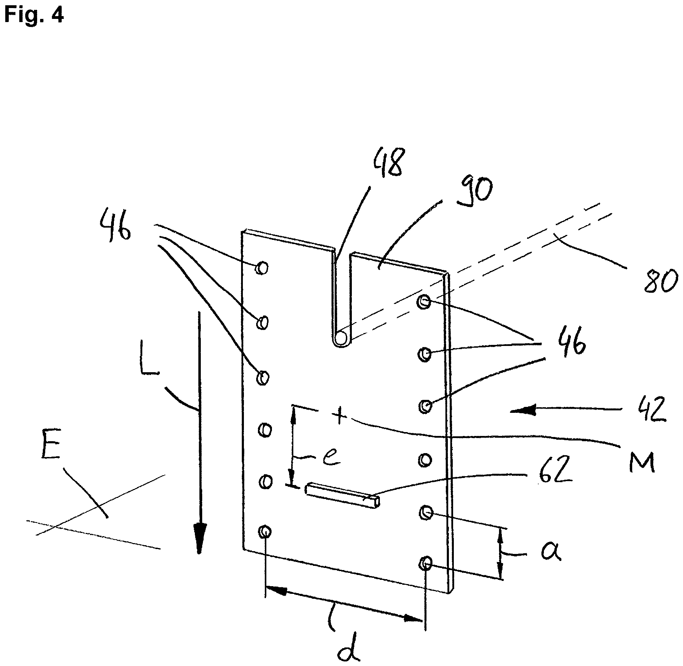

**Fig. 4** zeigt eine bevorzugte Ausführungsform eines Montagebereichs 42 bzw. einer Montageplatte 90 in einer perspektivischen Darstellung. Dargestellt sind zwei Reihen von Befestigungsbereichen 46, die sich jeweils entlang einer Längsrichtung L der Stützvorrichtung und der Montageplatte 90 erstreckt. Die Längsrichtung L steht senkrecht auf einer Ebene E. Die zwei Reihen von Befestigungsbereichen 46 weisen quer zur Längsrichtung L gesehen einen Reihenabstand d auf. Entlang der Längsrichtung L sind die Befestigungsbereiche 46 in einem Lochabstand a angeordnet. Weiter ist ein Mittelpunkt M der Montageplatte 90 dargestellt, von welchem ein Vorsprung 62 in einem Abstand e entlang der Längsrichtung L versetzt angeordnet ist. Gestrichelt dargestellt ist eine Anordnung bzw. Positionierung einer Verbindungswelle 80 relativ zu der Montageplatte 90. Beispielhaft dargestellt kann die Montageplatte 90 beispielsweise eine Ausnehmung 48 aufweisen, welche ausgelegt ist, die Verbindungswelle 80 sozusagen durch die Montageplatte 90 hindurchzuführen.

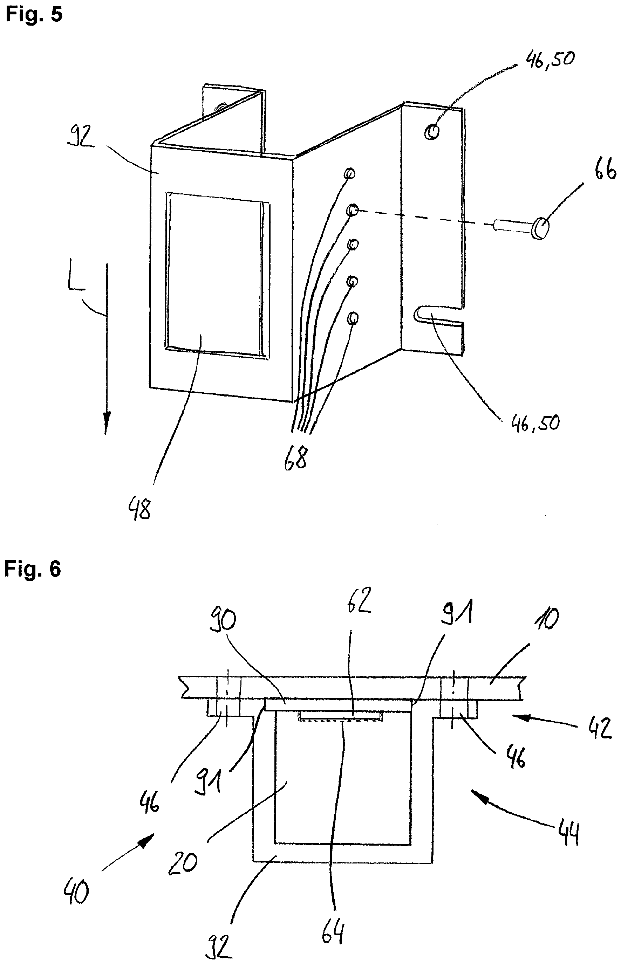

**Fig. 5** zeigt eine perspektivische Darstellung eines Bügels 92 in einer bevorzugten Ausführungsform. Bügel 92 umfasst fünf Öffnungen 68, welche dazu ausgelegt sind, zusammen mit einem Zusatzelement 66 einen Zusatz-Formschluss mit einer Stützvorrichtung 20 (hier nicht dargestellt) zu realisieren. Weiter umfasst der Bügel 92 Befestigungsbereiche 46 bzw. Bohrungen 50, zur Anordnung beispielsweise an einem weitere Bauteil 10. Es versteht sich, dass auch der Bügel 92 zumindest eine Ausnehmung 48 enthalten kann. Im Bereich der Ausnehmung 48 könnte beispielsweise ein außenliegendes Getriebe einer Stützvorrichtung 20 angeordnet sein.

**Fig. 6** zeigt eine Schnittdarstellung einer weiteren bevorzugten Ausführungsform einer Stützvorrichtung 20 für Sattelanhänger mit einer Montageeinheit 40 quer zu einer Längsrichtung L der Stützvorrichtung 20 gesehen. Eine Montageplatte 90 weist einen Vorsprung 62 auf, welcher in einen Rücksprung 64 der Stützvorrichtung 20 eingreift. Als Besonderheit sind in dieser Ausführungsform die Montageplatte 90 und ein Bügel 92 im Montagebereich 42 selbst formschlüssig über eine Außenkontur 91 der Montageplatte 90 verbunden. Die Montageplatte 90 ist sozusagen in den Bügel 92 formschlüssig eingesetzt. Der Bügel 92 bildet in seinem Montagebereich 42 die entsprechenden Befestigungsbereiche 46 zur Anordnung an einem weiteren Element 10 bzw. einem zu stützenden Bauteil aus.

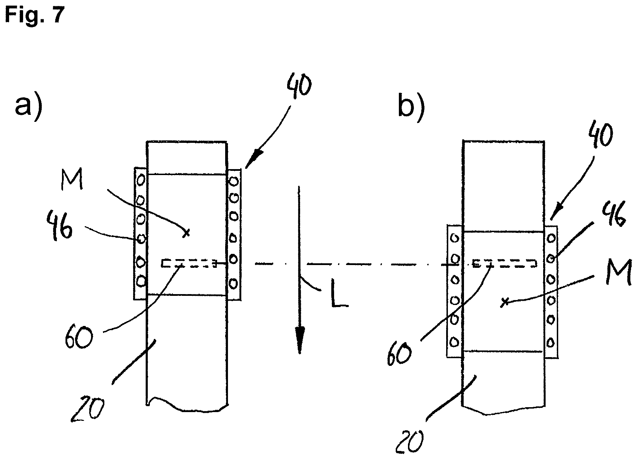

Die **Fig. 7a und 7b** zeigen Anordnungen einer Montageeinheit 40 an einer Stützvorrichtung 20 in zwei unterschiedlichen Positionen. Fig. 7a zeigt die Anordnung der Montageeinheit in einer oberen Position, Fig. 7b die Anordnung der Montageeinheit in einer unteren Position. Gestrichelt dargestellt ist ein Zusatz-Formschluss 60, welcher in den Figuren 7a und 7b auf gleicher Höhe liegt. In den Figuren 7a und 7b ist die Montageeinheit allerdings jeweils um 180° gedreht, so dass ein Mittelpunkt M der Montageeinheit 40 einmal oberhalb des Zusatz-Formschlusses 60 zu liegen kommt und einmal unterhalb. Für die Lage der Befestigungsbereiche 46 ist damit eine sehr große Variabilität entlang einer Längsrichtung L gegeben, obwohl eine Gesamtlänge der Montageeinheit 40 entlang der Längsrichtung L dazu gesehen relativ kurz ist.

### Bezugszeichenliste

- 10: weiteres Element, Sattelanhänger
- 20: Stützvorrichtung
- 40: Montageeinheit
- 42: Montagebereich
- 44: Anordnungsbereich
- 46: Befestigungsbereich
- 48: Ausnehmung
- 50: Bohrung
- 60: Zusatz-Formschluss
- 62: Vorsprung
- 64: Rücksprung
- 66: Zusatzelement
- 68: Öffnung
- 80: Verbindungswelle
- 90: Montageplatte
- 90': auskragendes Seitenteil
- 91: Außenkontur
- 92: Bügel
- 92': Deckel
- a: Lochabstand
- d: Reihenabstand
- e: Abstand
- L: Längsrichtung
- E: Ebene
- M: Mittelpunkt der Montageplatte

## Patentansprüche

1. Stützanordnung für Sattelanhänger, aufweisend
eine Montageeinheit (40) und
eine Stützvorrichtung (20), welche ein Außenstützrohr und ein Innenstützrohr aufweist und sich entlang einer Längsrichtung (L) erstreckt,
wobei die Montageeinheit (40) ausgelegt ist, die Stützvorrichtung (20) quer zur Längsrichtung (L) durch einen Form- und Kraftschluss festzulegen, und an einem weiteren Element (10), insbesondere einem Sattelanhänger, anzuordnen, wobei die Montageeinheit (40) einen Anordnungsbereich (44) aufweist, welcher eine Außenkontur der Stützvorrichtung (20) um ihre Längsachse (L) derart umfasst und/oder umschließt, wobei die Stützvorrichtung (20) kraftschlüssig und formschlüssig festlegbar ist, **dadurch gekennzeichnet, dass** zwischen der Stützvorrichtung (20) und der Montageeinheit (40) ein Zusatz-Formschluss (60) vorgesehen ist, welcher eine Verlagerung der Stützvorrichtung (20) und der Montageeinheit (40) relativ zueinander entlang der Längsrichtung (L) verhindert.

2. Stützanordnung nach Anspruch 1,
wobei die Montageeinheit (40) einen Montagebereich (42) und einen Anordnungsbereich (44) umfasst,
wobei der Montagebereich (42) für die Anordnung der Stützvorrichtung (20) an dem weiteren Bauteil (10) ausgelegt ist, und
wobei der Anordnungsbereich (40) für die Festlegung der Stützvorrichtung (10) ausgelegt ist.

3. Stützanordnung nach Anspruch 1 oder 2,
wobei eine Verlagerung und/oder Verdrehung der Stützvorrichtung (20) quer zur bzw. um die Längsrichtung (L) durch den Kraft- und/oder Formschluss zwischen der Montageeinheit (40) und der Stützvorrichtung (20) verhindert ist.

4. Stützanordnung nach einem der vorhergehenden Ansprüche,
wobei der Montagebereich (42) zumindest einen Befestigungsbereich (46) zur Anordnung der Montageeinheit (42) an dem weiteren Element (10) aufweist.

5. Stützanordnung nach einem der vorhergehenden Ansprüche,
wobei die Montageeinheit (40) mehrteilig, insbesondere zweiteilig, ausgebildet ist.

6. Stützanordnung nach einem der vorhergehenden Ansprüche,
wobei der Zusatz-Formschluss (60) durch zumindest einen Vorsprung (62) in der Stützvorrichtung (20) und/oder der Montageeinheit (40) ausgebildet ist, welcher in einen dazu korrespondierenden Rücksprung (64) eingreift.

7. Stützanordnung nach einem der vorhergehenden Ansprüche,
wobei der Zusatz-Formschluss (60) entlang der Längsrichtung (L) gesehen außermittig am Montagebereich (42) angeordnet ist.

8. Stützanordnung nach einem der vorhergehenden Ansprüche,
wobei der Zusatz-Formschluss (60) durch zumindest ein Zusatzelement (66) ausgebildet ist, das in zueinander korrespondierenden Öffnungen (68) der Stützvorrichtung (20) und der Montageeinheit (40) angeordnet ist.

9. Stützanordnung nach einem der Ansprüche 2-8,
wobei der Anordnungsbereich (40) die Stützvorrichtung (20) zumindest bereichsweise umfasst und/oder umschließt.

10. Stützanordnung nach einem der Ansprüche 2-9,
wobei durch das Zusammenwirken des Montagebereichs (42) mit dem Anordnungsbereich (40) der Kraftschluss aufgebaut wird.

11. Stützanordnung nach einem der vorhergehenden Ansprüche,
wobei der Form- und/oder Kraftschluss an einer Außenkontur der Stützvorrichtung wirkt.

12. Stützanordnung nach einem der vorhergehenden Ansprüche,
wobei der Kraftschluss eine Verlagerung der Stützvorrichtung (20) entlang der Längsrichtung (L) verhindert.

## Claims

1. A supporting assembly for semi-trailers, comprising a mounting unit (40) and a supporting device (20), having an outer supporting tube and an inner supporting tube and extending in a longitudinal direction (L), wherein the mounting unit (40) is configured to fix the supporting device (20) transversely to the longitudinal direction (L) by form and force fit, and to arrange this on a further element (10), in particular a semi-trailer, wherein the mounting unit (40) has an arrangement region (44), comprising and/or surrounding an outer contour of the supporting device (20) about the longitudinal axis (L) thereof such that the supporting device (20) can be fixed in a force-fitting and formfitting manner, **characterized in that** an additional form-fit connection (60) is provided between the supporting device (20) and the mounting unit (40), which prevents a displacement of the supporting device (20) and the mounting unit (40) relative to each other in the longitudinal direction (L).

2. The supporting assembly as claimed in claim 1, wherein the mounting unit (40) comprises a mounting region (42) and an arrangement region (44), wherein the mounting region (42) is configured for the arrangement of the supporting device (20) on the further component (10), and wherein the arrangement region (40) is configured for the fixing of the supporting device (10).

3. The supporting assembly as claimed in claim 1 or 2, wherein a displacement and/or twist of the supporting device (20) transversely to or about the longitudinal direction (L) is prevented by the force and/or form fit between the mounting unit (40) and the supporting device (20).

4. The supporting assembly as claimed in any of the preceding claims, wherein the mounting region (42) has at least one fixing region (46) for arrangement of the mounting unit (42) on the further element (10).

5. The supporting assembly as claimed in any of the preceding claims, wherein the mounting unit (40) is formed from several pieces, in particular two pieces.

6. The supporting assembly as claimed in any one of the preceding claims, wherein the additional form-fit connection (60) is formed by at least one protrusion (62) in the supporting device (20) and/or the mounting unit (40) which engages in a corresponding rebate (64).

7. The supporting assembly as claimed in any one of the preceding claims, wherein the additional form-fit connection (60) is arranged eccentrically on the mounting region (42) viewed in the longitudinal direction (L).

8. The supporting assembly as claimed in any of the preceding claims, wherein the additional form-fit connection (60) is formed by at least one additional element (66) which is arranged in mutually corresponding openings (68) of the supporting device (20) and the mounting unit (40).

9. The supporting assembly as claimed in any of claims 2 to 8, wherein the arrangement region (40) surrounds and/or encloses the supporting device (20) at least in regions.

10. The supporting assembly as claimed in any of claims 2 to 9, wherein the force-fit connection is created by the cooperation of the mounting region (42) with the arrangement region (40).

11. The supporting assembly as claimed in any of the preceding claims, wherein the form- and/or force-fit connection acts on an outer contour of the supporting device.

12. The supporting assembly as claimed in any of the preceding claims, wherein the force-fit connection prevents a displacement of the supporting device (20) in the longitudinal direction (L).

## Revendications

1. Agencement de soutien pour une remorque de semi-remorque, comprenant
une unité de montage (40) et
un dispositif de soutien (20), qui comprend un tube de soutien extérieur et un tube de soutien intérieur et qui s'étend le long d'une direction longitudinale (L),
dans lequel l'unité de montage (40) est conçue pour immobiliser le dispositif de soutien (20) transversalement à la direction longitudinale (L) par une coopération de formes et une coopération de forces, et pour l'agencer sur un autre élément (10), en particulier une remorque de semi-remorque,
dans lequel l'unité de montage (40) comporte une zone d'agencement (44) qui inclut et/ou qui enserre un contour extérieur du dispositif de soutien (20) autour de son axe longitudinal (L) de telle façon que le dispositif de soutien (20) est susceptible d'être immobilisé par coopération de forces et par coopération de formes,
**caractérisé en ce que**
entre le dispositif de soutien (20) et l'unité de montage (40) il est prévu une coopération de formes additionnelle (60), qui empêche un déplacement du dispositif de soutien (20) et du dispositif de montage (40) l'un par rapport à l'autre le long de la direction longitudinale (L).

2. Agencement de soutien selon la revendication 1,
dans lequel l'unité de montage (40) inclut une zone de montage (42) et une zone d'agencement (44),
dans lequel la zone de montage (42) est conçue pour l'agencement du dispositif de soutien (20) sur l'autre composant (10), et
dans lequel la zone d'agencement (40) est conçue pour l'immobilisation du dispositif de soutien (20).

3. Agencement de soutien selon la revendication 1 ou 2,
dans lequel un déplacement et/ou une rotation du dispositif de soutien (20) perpendiculairement à ou respectivement autour de la direction longitudinale (L) est empêché par la coopération de forces et/ou la coopération de formes entre l'unité de montage (40) et le dispositif de soutien (20).

4. Agencement de soutien selon l'une des revendications précédentes, dans lequel la zone de montage (42) comporte au moins une zone de fixation (46) pour l'agencement de l'unité de montage (42) sur l'autre élément (10).

5. Agencement de soutien selon l'une des revendications précédentes,
dans lequel l'unité de montage (40) est réalisée en plusieurs pièces, en particulier en deux pièces.

6. Agencement de soutien selon l'une des revendications précédentes,
dans lequel la coopération de formes additionnelle (60) est réalisée par au moins une saillie (62) dans le dispositif de soutien (20) et/ou dans l'unité de montage (40), laquelle s'engage dans un ressaut (64) qui lui correspond.

7. Agencement de soutien selon l'une des revendications précédentes,
dans lequel la coopération de formes additionnelle (60) est agencée sur la zone de montage (42) de manière décentrée, vue le long de la direction longitudinale (L).

8. Agencement de soutien selon l'une des revendications précédentes,
dans lequel la coopération de formes additionnelle (60) est réalisée par au moins un élément additionnel (66), qui est agencé dans des ouvertures mutuellement correspondantes (68) du dispositif de soutien (20) et de l'unité de montage (40).

9. Agencement de soutien selon l'une des revendications 2 à 8,
dans lequel la zone d'agencement (40) inclut et/ou enferme au moins localement le dispositif de soutien (20).

10. Agencement de soutien selon l'une des revendications 2 à 9,
dans lequel la coopération de forces s'établit grâce à la coopération de la zone de montage (42) avec la zone d'agencement (40).

11. Agencement de soutien selon l'une des revendications précédentes,
dans lequel la coopération de formes et/ou la coopération de forces agit sur un contour extérieur du dispositif de soutien.

12. Agencement de soutien selon l'une des revendications précédentes,
dans lequel la coopération de forces empêche un déplacement du dispositif de soutien (20) le long de la direction longitudinale (L).
